# EUROPEAN PATENT SPECIFICATION

(11) **EP 1 695 625 B1**
(45) Date of publication and mention of the grant of the patent: **24.02.2016**
(21) Application number: 06251080.5
(22) Date of filing: 28.02.2006
(51) Int. Cl.: A01N 63/04, A01N 25/04, A01P 7/04

(54) **Insecticidal oil-based formulations comprising an insecticidal filamentous fungus**
Insektizide Fadenpilz enthaltende Formulierungen auf Ölbasis
Formulations à base d'huile contenant des champignons filamenteux insecticides

(30) Priority: 28.02.2005 JP 2005052875; 29.11.2005 JP 2005343326
(43) Date of publication of application: 30.08.2006
(73) Proprietor: Sumitomo Chemical Company, Limited, Tokyo 104-8260 (JP)
(72) Inventor: Matsumura, Kenji, Tokyo (JP); Kimura, Shinya, Toyonaka-shi, Osaka (JP); Takashima, Yoshiki, Nishinomiya-shi, Hyogo (JP)
(74) Representative: Duckworth, Timothy John

(56) References cited:
- WO-A-93/24013
- US-A- 5 512 280
- US-A1- 2004 067 851
- ALVES ROBERTO T ET AL: "Effects of different formulations on viability and medium-term storage of Metarhizium anisopliae Conidia" NEOTROPICAL ENTOMOLOGY, SOCIEDAD ENTOMOLOGICA DO BRASIL, SAO PAULO, BR, vol. 31, no. 1, January 2002 (2002-01), pages 91-99, XP002333137 ISSN: 1519-566X

## Description

### BACKGROUND OF THE INVENTION

### Field of the Invention

The present invention relates to an insecticidal oil-based formulation comprising an insecticidal filamentous fungus and to use thereof.

### Background of the Invention

As a method for controlling insect pests avoiding use of a chemically synthesized compound as an active Ingredient, the use of an insecticidal filamentous fungus has drawn an attention, and there have been known insecticidal filamentous fungus formulations comprising an insecticidal filamentous fungus (e.g., U.S. Patent Nos. 5,730,973 and 6,030,924). As a method for increasing an insecticidal effect of such an insecticidal filamentous fungus formulation, applying a mixture of an insecticidal filamentous fungus and a petroleum hydrocarbon oil has been known (e.g., WO 95/10597; Pestic. Sci. 46, 299-306 (1996); Biocontrol Science and Technology 3, 337-346 (1993); and Mycol. Res. 103,7 901-907 (1999)).

In order to dilute with water such an insecticidal filamentous fungus formulation comprising an insecticidal filamentous fungus and a petroleum hydrocarbon oil to apply, similarly as a conventional oil-based formulation, it is necessary to add to the formulation a surfactant capable of emulsifying the petroleum hydrocarbon oil. However, many of those surfactants affect viability of the insecticidal filamentous fungus. Accordingly, there has been a problem that an insecticidal filamentous fungus formulation comprising said surfactant has adecreased stability of fungus viability (Florida Entomologist 65,1 116-126 (1982); Neotropical Entomology 31,1 91-99 (2002)).

US 5,512, 280 discloses methods for the maintenance and long term stabilization of fungal conidia using surfactants. This is based on the use of anionic surfactant in a concentration range of between 1 and 2 % (w/v) in an aqueous suspension of between 0.01 and 5.0 % (w/v) conidia.

Compositions in the form of wettable powders comprising filamentous fungi such as conidia are disclosed in US 2004/067851. WO 93/24013 discloses methods for storing fungal cultures, wherein conidia are packaged under conditions which maintain high viability, i.e. low relative humidity and oxygen.

### SUMMARY OF THE INVENTION

The present invention provides an insecticidal oil-based formulation comprising an insecticidal filamentous fungus, a petroleum hydrocarbon oil, a surfactant having a specific polarity (i.e., a nonionic surfactant suitable for emulsifying the petroleum hydrocarbon oil) and a desiccating agent, which can be diluted with water and can maintain a stability of the insecticidal filamentous fungus viability.

That is, the present invention provides:
1. an insecticidal oil-based formulation, which comprises a petroleum hydrocarbon oil, a nonionic surfactant suitable for emulsifying the petroleum hydrocarbon oil, a desiccating agent and an insecticidal filamentous fungus (hereinafter, also referred to as the present oil-based formulation);
2. the insecticidal oil-based formulation according to the above 1, wherein said nonionic surfactant has a HLB in the range suitable for emulsifying said petroleum hydrocarbon oil;
3. the insecticidal oil-based formulation according to the above 1 or 2, wherein said petroleum hydrocarbon oil having a distillation characteristic of a 50 vol % recovered temperature of 350°C to 550°C;
4. the insecticidal oil-based formulation according to the above 1, wherein said petroleum hydrocarbon oil has a distillation characteristic of a 50 vol % recovered temperature of 400°C to 500°C, and said nonionic surfactant is one or more surfactants selected from the group consisting of polyoxyethylene fatty acid ester, polyoxyethylene alkyl ether, sorbitan fatty acid ester and polyoxyalkylene alkyl ether, and has a HLB in the range suitable for emulsifying said petroleum hydrocarbon oil;
5. the insecticidal oil-based formulation according to any of the above 1 to 4, wherein said desiccating agent is one or more desiccating agents selected from silicon oxide compounds and calcium compounds;
6. the insecticidal oil-based formulation according to any of the above 1 to 5, wherein said insecticidal filamentous fungus is one or more strains of fungi of genera selected from the group consisting of genus Paecilomyces, genus Beauveria, genus Metarhizium, genus Nomuraea, genus Verticillium, genus Hirsutella, genus Culicinomyces, genus Sorosporella and genus Tolypocladium;
7. the insecticidal oil-based formulation according to any of the above 1 to 5, wherein said insecticidal filamentous fungus is a filamentous fungus of the genus Paecilomyces;
8. the insecticidal oil-based formulation according to any of the above 1 to 5, wherein said insecticidal filamentous fungus is a filamentous fungus of Paecilomyces tenuipes;
9. the insecticidal oil-based formulation according to any of the above 1 to 5, wherein said insecticidal filamentous fungus is Paecilomyces tenuipes strain T1 (FERM BP-7861);
10. the insecticidal oil-based formulation according to any of the above 1 to 5, wherein said insecticidal filamentous fungus is a filamentous fungus of the genus Beauveria;
11. the insecticidal oil-based formulation according to any of the above 1 to 5, wherein said insecticidal filamentous fungus is a filamentous fungus belonging to Beauveria bassiana;
12. the insecticidal oil-based formulation according to any of the above 1 to 5, wherein said insecticidal filamentous fungus is one or more strains selected from the group consisting of Beauveria bassiana strain F-667 (FERM BP-10514), Beauveria bassianastrain F-942 (FERMBP-10515), Beauveriabassianastrain F-1134 (FERM BP-10516), Beauveria bassiana strain F-1274 (FERM BP-10517) and Beauveria bassiana strain F-1310 (FERM BP-10518) ; and
13. a method for controlling insect pests, which comprises applying the insecticidal oil-based formulation according to any of the above 1 to 12 to an insect pest, a habitat of the insect pest or a plant vulnerable to the insect pest (hereinafter, also referred to as the present insecticidal method) and the like.

According to the present invention, an insecticidal oil-based formulation comprising an insecticidal filamentous fungus can be provided, which can be diluted with water with maintaining a stability of the insecticidal filamentous fungus viability.

### DESCRIPTION OF THE INVENTION

The present invention is described in detail below.

The present oil-based formulation is an insecticidal oil-based formulation comprising a petroleum hydrocarbon oil, a nonionic surfactant suitable for emulsifying the petroleum hydrocarbon oil, a desiccating agent and an insecticidal filamentous fungus, and preferably exemplified by an insecticidal oil-based formulation essentially consisting of a petroleum hydrocarbon oil, a nonionic surfactant suitable for emulsifying the petroleum hydrocarbon oil, a desiccating agent and an insecticidal filamentous fungus.

Examples of the insecticidal filamentous fungus used in the present oil-based formulation include one or more strains of filamentous fungi selected from one or more genera selected from the group consisting of genus Paecilomyces, genus Beauveria, genus Metarhizium, genus Nomuraea, genus Verticillium, genus Hirsutella, genus Culicinomyces, genus Sorosporella and genus Tolypocladium.

Examples of the insecticidal filamentous fungus of the genus Paecilomyces include a filamentous fungus of Paecilomyces tenuipes, a filamentous fungus of Paecilomyces fumosoroseus and a filamentous fungus of Paecilomyces farinosus and the like. Specific examples thereof include Paecilomyces tenuipes strain T1, Paecilomyces tenuipes strain ATCC44818 (deposited with the American Type Culture Collection, Virginia, US) Paecilomyces fumosoroseus strain IFO8555 (deposited with the Institute for Fermentation, Osaka; Japan), Paecilomyces fumosoroseus strain IFO7072 (deposited with the Institute for Fermentation, Osaka, Japan) and the like . Examples of the insecticidal filamentous fungus of the genus Beauveria include a filamentous fungus of Beauveria bassiana and a filamentous fungus of Beauveria brongniartii and the like. Specific examples thereof include BeauveriabassianastrainF-667, Beauveria bassiana strain F-942, Beauveria bassiana strain F-1134, Beauveria bassiana strain F-1274 and Beauveria bassiana strain F-1310 and the like. Examples of the insecticidal filamentous fungus of the genus Metarhizium include a filamentous fungus of Metarhizium anisopliae, a filamentous fungus of Metarhizium f lavoviride and a filamentous fungus of Metarhizium cylindrosporae and the like. Examples of the insecticidal filamentous fungus of the genus Nomuraea include a filamentous fungus of Nomuraea rileyi and the like. Examples of the insecticidal filamentous fungus of the genus Verticillium include a filamentous fungus of Verticillium lecanii and the like.

Among these insecticidal filamentous fungi, for example, any filamentous fungus of the followings is preferable.
(1) a filamentous fungus of the genus Paecilomyces,
(2) a filamentous fungus having a nucleotide sequence of DNA encoding 5.8S ribosomal RNA of nucleus and a nucleotide sequence of DNA encoding 28S ribosomal RNA of nucleus, which are shown in SEQ ID NOS: 1 and 2, respectively
(3) a filamentous fungus of Paecilomyces tenuipes
(4) a filamentous fungus, Paecilomyces tenuipes strain T1, deposited with the National Institute of Advanced Industrial Science and Technology International Patent Organism Depository under an accession number FERM BP-7861.
(5) a filamentous fungus of the genus Beauveria
(6) a filamentous fungus of Beauveria bassiana
(7) filamentous fungi, Beauveria bassiana strain F-667 under an accession number FERM BP-10514, Beauveria bassiana strain F-942 under an accession number FERM BP-10515, Beauveria bassiana strain F-1134 under an accession number FERM BP-10516 , Beauveria bassiana strain F-1274 under an accession number FERM BP-10517 and Beauveria bassiana strain F-1310 under an accession number FERM BP-10518, which are deposited with the National Institute of Advanced Industrial Science and Technology International Patent Organism Depository.

These insecticidal filamentous fungi may be isolated from nature or may be available from culture collections and the like.

When isolating from nature, first, a dead insect is taken in field, which has already stiffened and has a synnema growing from a body thereof. A conidium formed on said dead insect is touched with a platinum loop, and the platinum loop is rubbed on a solid culture medium such as SDY medium (composition: 1% (W/V) of peptone, 1% (W/V) of yeast extract, 2% (W/V) of glucose, 1.5% (W/V) of agar) and Czapek medium (composition: 0.3% (W/V) of NaNO₃, 0.1% (W/V) of K₂HPO₄, 0.05% (W/V) of MgSO₄·7H₂O, 0.05% (W/V) of KCl, 0.001% (W/V) of FeSO₄·7H₂O, 3% (W/V) of sucrose, 1.5% (W/V) of agar) in a line motion. The culture medium is cultured for few days at 25°C, and then an independent colony of a grown fungus is cut out and transferred to a new solid culture medium such as SDY medium and Czapek medium. The colony is further cultured at 25°C. A filamentous fungus may be selected by identifying grown fungi (e.g., determining whether the filamentous fungus is categorized under the Paecilomyces or whether a filamentous fungus is categorized under the Beauveria) according to a method described in, for example, "ShokubutuBoeki (Plant Disease Protection)" a special issue No.2, Tenteki-Biseibutu-No-Kenkyu-Shuho, published by Japan Plant Protection Association.

Next, the selected filamentous fungus is determined whether it has an insecticidal activity. The selected filamentous fungus (e.g., filamentous fungus of the genus Paecilomyces or the genus Beauveria) is cultured on a solid culture medium such as SDY medium and Czapek medium at 25°C. A formed conidium is suspended in sterile water so that a concentration thereof is 1 × 10⁸ CFU/mL. Ten insects belonging to the same species as of the dead insect from which the fungus has been isolated are dipped in the resultant suspension for 30 seconds and then kept under conditions of 25°C and 100% humidity. If there is a dead insect 6 days after dipping, the fungus can be selected as an insecticidal filamentous fungus (e.g., insecticidal filamentous fungus of the genus Paecilomyces or the genus Beauveria).

Paecilomyces tenuipes strain T1 is a known strain described in United State Paten Application Publication US2003-0124098 A1, which was originally deposited under an accession number FERM P-18487 and has been deposited under the Budapest Treaty with the National Institute of Advanced Industrial Science and Technology International Patent Organism Depository as an accession number FERM BP-7861 after transfer from the original deposition to the international deposition. Mycological properties thereof are as follows.
(1) the growth rate (25°C, 7 days)
   diameter of the colony: 25 to 30 mm (2% maltose extract agar medium plate), 25 to 30 mm (oatmeal agar medium plate)
(2) color of the front surface of colony
   white (2% maltose extract agar medium plate), white (oatmeal agar medium plate)
(3) color of the under surface of colony
   white (2% maltose extract agar medium plate), white to light yellow (oatmeal agar medium plate)
(4) texture of the front surface of colony
   wool-like to down-like
(5) conidiophore
   smooth-surfaced branching and unstructured verticil
(6) conidium
   smooth-surfaced elliptical to circular shape linkage, about 4 µm × about 2 µm
(7) chlamydospore
   none (25°C, 9 day period)
(8) nucleotide sequence of DNA encoding 5.8S ribosomal RNA of nucleus and nucleotide sequence of DNA encoding 28S ribosomal RNA of nucleus
   the nucleotide sequence of DNA encoding 5.8S ribosomal RNA of nucleus is shown in SEQ ID NO: 1 and the nucleotide sequence of DNA encoding 28S ribosomal RNA of nucleus is shown in SEQ ID NO: 2.

Beauveria bassiana strain F-667, Beauveria bassiana strain F-942, Beauveria bassiana strain F-1134, Beauveria bassiana strain F-1274 and Beauveria bassiana strain F-1310 are known strain described in, for example, Japanese Patent Application Publication JP-A-2005-304421, which was originally deposited under an accession number FERM P-19762, FERM P-19763, FERM P-19764, FERM P-19765, FERMP-19766, respectively and has been deposited under the Budapest Treaty with the National Institute of Advanced Industrial Science and Technology International Patent Organism Depository as an accession number FERM BP-10514 FERM BP-10515, FERM BP-10516, FERM BP-10517, FERM BP-10518, respectively after transfer from the original deposition to the international deposition. Mycological properties thereof are as follows.

**Table 1**

| Fungus of the present invention | F-667 | F-942 | F-1134 | F-1274 | F-1310 |
|---|---|---|---|---|---|
| Vegetative hyphae | Having a septum | | | | |
| Conidiophore | Not forming a raduliform microcystis | | | | |
| Conidiogenous cell | Cells are often formed as an aggregate like a bunch of grapes (cluster) or in isolation and not formed as a palisaded array. The base is enlarged and the apex is porrect zig-zag form. A Conidium is generated on a denticulate protuberance formed on the apex. | | | | |
| Conidium | Sympodioconidium is generated from a conidiogenous cell , subglobose , 2 to 3 µm. | | | | |
| Color of the front surface of colony | White | White to light yellow | White | White | White |
| Color of the under surface of colony | Light yellow | Light yellow | Light yellow | Light yellow | Light yellow |
| Red chromogenesis (*1) | None | None | None | nonce | None |
| Growth optimal temperature | About 30°C | About 25°C | About 25°C | About 25°C | About 25°C |
| Growth at 35°C | No substantial growth | No substantial growth | No substantial growth | No substantial growth | No substantial growth |
| Growth at 15°C (*2) | 0.35 to 0.45 | 0.45 to 0.55 | 0.35 or less (viable) | 0.35 to 0.45 | 0.55 or more |
| Growth at 4°C | No substantial growth | No substantial growth | No substantial growth | No substantial growth | No substantial growth |

| | | | | | |
|---|---|---|---|---|---|
| (*1) result of hobservation after cultivation in a liquid culture medium comprising 30 g/L of glucose, 10 g/L of peptone and 10 g/L of yeast extract for 3 days at 25°C. (*2) relative diameter of a colony compared to a diameter of a colony grown at 25°C (for 7 days) as set to 1 | | | | | |

The insecticidal filamentous fungus used in the present oil-based formulation can be prepared by culturing it in a liquid culture medium or a solid culture medium.

The culture medium used in culturing said fungus is not specifically limited as long as it allows said fungus to proliferate, and those can be used that are conventionally used for culturing microorganisms and contain appropriately a carbon source, a nitrogen source, an organic salt and an inorganic salt .

The liquid culture medium can be usually prepared by appropriately mixing water with a carbon source, a nitrogen source, an organic salt, an inorganic salt, vitamins and the like.

Examples of the carbon source used in the liquid culture medium include sugars such as glucose, dextrin and sucrose; sugar alcohols such as glycerol ; organic acids such as fumaric acid, citric acid and pyruvic acid; animal oils; plant oils; molasses and the like. The amount of the carbon source contained in the culture medium is usually 0.1 to 20% (w/v).

Examples of the nitrogen source used in the liquid culture medium include natural organic nitrogen sources such as meat extract, peptone, yeast extract, malt extract, soybean powder, corn steep liquor, cotton seed powder, dried yeast and casamino acid; ammonium salts or nitrates of inorganic acids such as sodium nitrate, ammonium chloride, sodium sulfate and ammonium phosphate; ammonium salts of organic acids such as ammonium fumarate and ammonium citrate; urea; amino acids and the like. The amount of the nitrogen source contained in the culture medium

Examples of the organic salt and the inorganic salt used in the liquid culture medium include chlorides sulfates, acetates, carboxylates or phosphates of potassium, sodium, magnesium, iron, manganese, cobalt and zinc and the like, and more specifically, include sodium chloride, potassium chloride, magnesium sulfate, iron (I) sulfate, manganese sulfate, cobalt chloride, zinc sulfate, copper sulfate, sodium acetate, calcium carboxylate, sodium carboxylate, potassium phosphate monohydrate and potassium phosphate dihydrate and the like . The amount of the inorganic salt or organic salt contained in the culture medium is usually 0.0001 to 5% (w/v).

Examples of the vitamin include thiamine and the like.

Examples of the solid culture medium include main crops such as rice, wheat and the like and cereals such as maize, millet, barnyard grass, kaoliang, buckwheat and the like and sawdust, bagasse, rice hulls, wheat bran, seedpod, straw, corncob, cotton seed lees, bean curd refuse, agar and gelatin and the like. Those may be used as a mixture of two or more of them. Also included are those which contain the carbon source, the nitrogen source, the organic salt, the inorganic salt and/or the vitamin and the like used in the liquid culture medium described above.

Specific examples of the culture medium used in culturing the insecticidal filamentous fungus include liquid culture media such as 2% maltose extract liquid medium, oatmeal liquid medium, potato dextrose liquid medium, Sabouraud liquid medium and L-broth liquid medium and solid culture media such as rice, barley, wheat bran and an agar medium (2% maltose extract agar medium, oatmeal agar medium, potato dextrose agar medium, Sabouraud agar medium, L-broth agar medium and the like).

Cultivation of the Fungus can be conducted according to methods conventionally utilized to culture microorganisms.

That is, examples of a method for culturing in a liquid culture medium include test tube shake culture, reciprocal culture, jar fermenter and tank culture, and examples of a method for culturing in a solid culture medium include stationary culture, which may be turned according to need.

The culture temperature may appropriately change in the range which allows the Fungus to grow, but is usually the range of 10°C to 35°C, and preferably 15°C to 35°C. The pH of the culture medium is usually the range of about 4 to 11, and preferably about 5 to 7. The culture period may change with the culturing conditions, but is usually in the range of about 1 day to about 2 months.

The Fungus of can be obtained by a method of centrifuging a culture fluid in which the Fungus of the present invention is cultured, a method of adding distilled water and the like to and scraping the fungus from the surface of a solid culture medium on which the Fungus of the present invention is cultured or a method of drying and grinding the solid culture medium and then fractionating with sieve.

An amount of the insecticidal filamentous fungus formulated in the present oil-based formulation is not specifically limited, as long as the present oil-based formulation is prepared so as to achieve a required insecticidal effect when used, but is usually 10³ to 10¹³ CFU (CFU: colony forming unlit) of the Fungus of the present invention per 1 g of the present oil-based formulation.

The insecticidal filamentous fungus formulated in the present oil-based formulation is present at an amount of generally 0.05 to 20% by weight, preferably 0.1 to 20% by weight, and more preferably 1 to 20% by weight, and especially preferably 1 to 10% by weight of the total weight of the present oil-based formulation.

The petroleum hydrocarbon oil use in the present oil-based formulation is a hydrocarbon oil derived from petroleum, which has a distillation characteristic of a 50 vol % recovered temperature (in other words, 50 % distillation temperature, the temperature at which 50% by volume of the oil evaporates) of 350°C to 550°C and preferably 400°C to 500°C. More preferable examples of the present petroleum hydrocarbon oil include a petroleum hydrocarbon oil in which a paraffin hydrocarbon accounts for 50 to 100% by weight (e.g., by n-d-M analysis, 20°C) of the ingredients and the like. Especially preferable examples of the present petroleum hydrocarbon oil include a petroleum hydrocarbon oil in which a paraffin hydrocarbon accounts for 60 to 90% by weight (e. g. , by n-d-M analysis , 20°C) and an aromatic hydrocarbon accounts for not more than 3% by weight (e.g., by n-d-M analysis, 20°C) of the ingredients and the like.

Specific examples include:
(1) a petroleum hydrocarbon oil having a distillation characteristic of a 50 vol % recovered temperature of around 419°C, and in which a paraffin hydrocarbon accounts for 80% by weight (by n-d-M analysis, 20°C) and an aromatic hydrocarbon accounts for 0% by weight (by n-d-M analysis, 20°C) of the ingredients; and
(2) a petroleum hydrocarbon oil having at distillation characteristic of a 50 vol % recovered temperature of around 472°C, and in which a paraffin hydrocarbon accounts for 74% by weight (by n-d-M analysis, 20°C) and an aromatic hydrocarbon accounts for 1.3% by weight (by n-d-M analysis, 20°C) of the ingredients; and the like.

Those petroleum hydrocarbon oils may be commercially available as commercial items (e.g., a pesticide oil and a pesticide machine oil P), for example, from NICHIBEIKOYU Co., Ltd.

A distillation characteristic of a 50 vol % recovered temperature and composition of a petroleum hydrocarbon oil may be determined according to the following Official Methods.
(1) Analysis method for a distillation characteristic of a 50 vol % recovered temperature: JIS K2254 (pp. 37-44), "Petroleum products - Determination of distillation characteristics: Testing method for distillation by gas chromatograph"
(2) Analysis method for a composition of a petroleum hydrocarbon oil (n-d-M analysis): ASTM D3238-95 (pp. 1-3). "Standard test method for calculation of carbon distribution and structural group analysis of petroleum oils by the n-d-M"

An amount of the petroleum hydrocarbon oil contained in the present oil-based formulation is usually 30 to 99% by weight, preferably 50 to 98% by weight, more preferably 50 to 97% by weight, even more preferably 70 to 97% by weight and especially preferably 70 to 95% by weight of the total weight of the present oil-based formulation.

The nonionic surfactant used in the present oil-based formulation is a nonionic surfactant suitable for emulsifying the above-described petroleumhydrocarbon oil. Said surfactant is not specifically limited as long as it does not affect an insecticidal filamentous fungus contained in the present oil-based formulation or object plants for application and the like, and including specifically, dialkyl sulfosuccinate, polyoxyethylene alkyl ether, polyoxyethylene fatty acid ester, sorbitan fatty acid ester, polyoxyalkylene alkyl ether, polyoxyethylene hydrogenated castor oil, polyoxyethylene fatty acid amide, polyhydric alcohol ester, sugar alcohol derivatives and silicone-based surfactants and the like. Specific examples include, as a polyoxyethylene fatty acid ester, Pegnol 24-O (TOHO Chemical Industry Co., LTD.), as polyoxyethylene alkyl ether, Pegnol O-4 (TOHO Chemical Industry Co., LTD.) and Pegnol ST-3 (TOHO Chemical Industry Co., LTD.), as a mixture of sorbitan fatty acid ester and polyoxyalkylene alkyl ether Sorpol 4274. Preferable examples include polyoxyethylene fatty acid ester, polyoxyethylene alkyl ether, sorbitan fatty acid ester and polyoxyalkylene alkyl ether and the like. For those nonionic surfactants, a single nonionic surfactant may be used alone, or a mixture of two or more nonionic surfactants may be used.

Preferable HLB more suitable for the present invention of a nonionic surfactant or a mixture of nonionic surfactants suitable for emulsifying the above-described petroleum hydrocarbon oil, which may be determined according to a sort and an amount of a petroleum hydrocarbon oil used together, is generally exemplified in the range of 7 to 10.

A range of HLB of nonionic surfactant or the mixture of nonionic surfactants suitable for emulsifying is preferably 7 to 10, and more preferably 7 to 9, when using together with a petroleumhydrocarbon oil that has a distillation characteristic of a 50 vol % recovered temperature of 350°C to 550°C and in which a paraffin hydrocarbon accounts for 50 to 100% by weight of in the ingredients.

An amount of the nonionic surfactant or the mixture of nonionic surfactants contained in the present oil-based formulation is generally 0.1 to 50% by weight, preferably 1 to 20% by weight, and more preferably 1 to 10% by weight, and specifically preferably 3 to 10% by weight of the total weight of the present oil-based formulation.

A desiccating agent used in the present oil-based formulation is not specifically limited as long as it has an ability to absorb water and does not affect the insecticidal filamentous fungus, preferably including silicon oxide compounds such as silica gel, zeolite and molecular sieves and calcium compounds such as calcium chloride and calcium sulfate. A single desiccating agent may be used alone, or a mixture of two or more desiccating agents may be used.

An amount of the desiccating agent contained in the present oil-based formulation is generally 0.05 to 20% by weight, preferably 0.5 to 10% by weight, and more preferably 1 to 10% by weight of the total weight of the present oil-based formulation.

The desiccating agent used in the present oil-based formulation can be added to the present oil-based formulation by any method, including a method of mixing the agent into the present oil-based formulation and a method of placing the agent in a container for storage of the present oil-based formulation and the like.

A weight ratio (parts by weight) of respective ingredients contained in the present oil-based formulation is, for example, as represented by the petroleum hydrocarbon oil: the nonionic surfactant or the mixture of nonionic surfactants: the desiccating agent: the insecticidal filamentous fungus, 30 to 99 parts by weight : 0.1 to 50 parts by weight: 0.05 to 20 parts by weight : 0.05 to 20 parts by weight, preferably 50 to 98 parts by weight: 1 to 20 parts by weight: 0.5 to 10 parts by weight: 0.1 to 20 parts by weight, more preferably 50 to 97 parts by weight:1 to 20 parts by weight: 1 to 10 parts by weight: 1 to 20 parts by weight, even more preferably 70 to 97 parts by weight: 1 to 10 parts by weight: 1 to 10 parts by weight: 1 to 10 parts by weight, and especially preferably 70 to 95 parts by weight: 3 to 10 parts by weight: 1 to 10 parts by weight: 1 to 10 parts by weight.

The present oil-based formulation may further comprise other submaterial commonly used in pesticides such as a solid carrier, a liquid carrier, a liquid property-controlling agent (e. g. , a pH adjuster), a spreader, a wetting agent, a stabilizer (anantiseptic agent, an antifreezingagent, an anticaking agent, an antioxidant agent, a UV absorber) and a drift preventing agent than the components described above, as other component or the reminder according to need, within a scope that does not cause a loss of an insecticidal activity of the insecticidal filamentous fungus used in the present invention and characteristics of the formulation.

When adding those submaterials, a total amount of added submaterials is generally 0.1% by weight to 50% by weight, preferably 0.5% by weight to 20% by weight of the total weight of the present oil-based formulation.

Any usual method for preparing a pesticide formulation can be applied for a method for preparing the present oil-based formulation. For example, the present oil-based formulation may be prepared by mixing fungus cells of the insecticidal filamentous fungus obtained according to the above-described method with a petroleum hydrocarbon oil, a nonionic surfactant and a desiccating agent, and if needed, a submaterial as other component or the remainder. In mixing, a mortar! and a pestle, a spatula and the like may be used, or a mixer such as a ribbon mixer and a nauta mixer may be used.

Examples of an insect pest to which the present oil-based formulation has an insecticidal effect include the following insect pests.

Hemiptera: planthoppers (Delphacidae) such as small brown planthopper (Laodelphax striatellus), brown rice planthopper (Nilaparvata lugens) and whitebacked rice planthopper (Sogatella furcifera); leafhoppers (Deltocephalidae) such as green rice leafhopper (Nephotettix cincticeps) and tea green leafhopper (Empoasca onukii); aphids (Aphididae) such as cotton aphid (Aphis gossypii), green peach aphid (Myzus persicae) and turnip aphid (Lipaphis pseudobrassicae); shield bugs (Pentatomidae); whiteflies (Aleyrodidae) such as greenhouse whitefly (Trialeurodes vaporariorum), sweetpotato whitefly (Bemisia tabaci) and silverleaf whitefly (Bemisia argentifolii); scales; lace bugs (Tingidae); psyllids (Psyllidae) and the like.

Diptera: Mosquitos (Culicidae) such as Culex (e.g., common house mosquito (Culex pipiens pallens)), Aedes, Anopheles and Chironomus spp.; house flies (Muscidae) such as house fly (Musca domestica); blow flies (Calliphoridae); meat flies (Sarcophagidae); anthomyiid flies (Anthomyiidae); gall midges (Cecidomyiidae); leafminer flies (Agromyzidae); Fruit flies (Tephritidae); vinegar flies (Droophilidae); moth flies (Psychodidae); horse flies (Tabanidae); black flies (Simuliidae); stable flies (Muscidae) and the like.

Lepidoptera: pyralid moths (Pyralidae) such as rice stem borer (Chilo suppressalis), rice leaf roller (Cnaphalocrocis medinalis), European corn borer (Ostrinia nubilalis) and Parapediasia teterrella; owlet moths (Noctuidae) such as common cutworm (Spodopteralitura), beet armyworm (Spodoptera exigua), oriental armyworm (Pseudaletia separata), cabbage armyworm (Mamestra brassicae), black cutworm (Agrotis ipsilon), Trichoplusia spp., Heliothis spp., Helicoverpa spp. (e.g., corn earworm (Helicoverpaarmigera)), Earias spp. and Autographa spp. (e.g., beet semi-looper (Autographa nigrisigna)); whites (Pieridae) such as common cabbageworm (Pieris rapae crucivora); yponomeutids (Yponomeutidae) such as diamondback moth (Plutella xylostella); tussock moths (Lymantriidae) such as oriental tussockmoth (Euproctis taiwana), gypsymoth (Lymahtria dispar), browntail moth (Euproctis similis); slug caterpillar moths (Limacodidae) such as Scopelodes contracus; tent caterpillar moths (Lasiocampidae) such as pine caterpillar (Dendrolimus spectabilis); leafroller moths (Tortricidae) such as summer fruit tortrix (Adoxophyesorana fasciata), oriental fruit moth (Grapholita molesta) and Codling moth (Cydia pomonella); Carposinidae such as peach fruit moth (Carposina niponensis); Lyonetiidae such as Apple leaf miner (Lyonetia clerkella); Gracillariidae such as Apple leafminer (Phyllonorycter ringoniella); Phyllocnistidae such as citrus leafminer (Phyllocnistis citrella); Yponomeuta evonymella such as cabbage moth (Plutella xylostella); gelechiid moths (Gelechii) such as Pink Bollworm (Pectinophora gossypiella); tiger moths (Arctiidae); Tineidae and the like.

Coleoptera: leaf beetles (Chrysomelidae), chafers (Scarabaeidae), snout beetles (Curculionidae), leaf-rolling weevils (Attelabidae), Lady Beetles (Coccinelidae), Longhorn Beetles (Cerambycidae), Darkling Beetles (tenebrionidae) and the like.

Thysanoptera: thrips (Thripidae) such as the genus Thrips (e.g., melon thrips (Thrips palmi)), the genus Frankliniella (e.g., Western Flower Thrips (Frankliniella occidentalis)) and the genus Sciitothrips (e.g., yellow tea thrips (Sciltothrips dorsalis)); Tube-tailed Thrips (Phlaeothripidae) and the like.

Blattaria: blattid cockroachs (Blattidae), blattellid cockroachs (blattelidiae) and the like. Orthoptera: grasshoppers (ACRIDIDAE), mole crickets (Gryllotalpidae).

Siphonaptera: fuman fleas (Pulex Irritans), cat fleas (Ctenocephalides felis) and the like.

Anoplura: body lice (Pediculus humanus) and the like.

Isoptera: Japanese termite (Reticulitermes speratus), Formosan subterranean termite (Coptotermes formosanus) and the like.

The present oil-based formulation is generally used by applying it to the insect pest, a habitat of the insect pest or a plant vulnerable to the insect pest. When applying to a plant vulnerable to the insect pest, it is generally preferable that the present oil-based formulation is diluted with water, and the resultant solution is used in foliage application to the plant.

When applying the present oil-based formulation to the insect pest, a habitat of the insect pest or a plant vulnerable to the insect pest the application amount thereof is an insecticidally effective amount, usually 10⁵ to 10¹⁹ CFU, preferably 10⁷ to 10¹⁷ CFU of the insecticidal filamentous fungus body in the present oil-based formulation used for 1000 m².

### Examples

The present invention is described in further detail by the following examples.

### Example 1 (Isolation of an insecticidal filamentous fungus of the genus Paecilomyces)

A dead insect is taken in field, which has already stiffened and has a synnema growing from a body thereof . A conidium formed on said dead insect is touched with a platinum loop, and the platinum loop is rubbed on a SDY medium so as to draw a line. The culture medium is cultured for few days at 25°C, and then an independent colony of a grown fungus is cut out and transferred to a new SDY medium. The colony is further cultured at 25°C.

Among the resultant fungi, a fungus having the following properties a) to h) is selected as a filamentous fungus of the genus Paecilomyces.
a) A vegetative hyphae has a septum.
b) There is no sexual reproduction.
c) A conidium is not formed in a picnidium, a pot-like apparatus, but is an exoconidium.
d) A conidium is a phiaoconidium formed from a phialide apex, dry and catenulate.
e) A conidiophore has no microcystis on the top thereof.
f) A phialide is not arranged in a palisade form on a coremium.
g) catenulate conida do not form a bundle.
h) the phialide has a clear, deformed or lax verticillate neck.

Next, the selected filamentous fungus of the genus Paecilomyces is cultured in a SDY medium at 25°C. A formed conidium is suspended in sterile water so that a concentration thereof is 1 × 10⁸ CFU/mL. Ten insects belonging to the same species as of the dead insect from which the fungus has been isolated are dipped in the resultant suspension for 30 seconds, and then reared under conditions of 25°C and 100% humidity. If there is a dead Insect 6 days after dipping, the fungus can be selected as an insecticidal filamentous fungus of the genus Paecilomyces.

### Example 2 (Isolation of an insecticidal filamentous fungus of the genus Beauveria)

A dead insect is taken in field, which has already stiffened and has a synnema growing from a body thereof. A conidium formed on said dead insect is touched with a platinum loop, and the platinum loop is rubbed on a SDY medium so as to draw a line. The culture medium is cultured for few days at 25°C, and then an independent colony of a grown fungus is cut out and transferred to a new SDY medium. The colony is further cultured at 25°C.

Among the resultant fungi, a fungus having the following properties a) to g) is selected as a filamentous fungus of the genus Beauveria.
a) A vegetative hyphae has a septum.
b) There is no sexual reproduction.
c) A conidium is not formed in a picnidium, a pot-like apparatus, but is an exoconidium.
d) A conidium is a sympodioconidium formed from a conidiogenous cell, and the conidiogenous cell is rachis or odontoid.
e) A conidiogenous cell is not formed in a membranous layer.
f) A conidiophore has no microcystis.
g) A conidiogenous cell is lageniform, having a turgid base and a rachis apex.

Next, the selected filamentous fungus of the genus Beauveria is cultured in a SDY medium at 25°C. A formed conidium is suspended in sterile water so that a concentration thereof is 1 x 10⁸ CFU/mL. Ten insects belonging to the same species as of the dead insect from which the fungus has been isolated are dipped in the resultant suspension for 30 seconds, and then reared under conditions of 25°C and 100% humidity. If there is a dead insect 6 days after dipping, the fungus can be selected as an insecticidal filamentous fungus of the genus Beauveria.

### Example 3 (Preparation of an insecticidal filamentous fungus 1)

In a 500 mL flask, a fungus body of Paecilomyces tenuipes T1 strain, which was previously cultured in potato dextrose agar medium (Difco Laboratories), was inoculated to 100 mL of potato dextrose medium (Difco Laboratories), and then cultured with shaking for 3 days at 25°C to obtain a culture fluid. Next, 80 g of flaked barley with the seed coat (Matsukage Seibaku Co. ltd.) was pre-crushed to particles having a diameter of 1 to 5 mm by a hand crusher HC-1 (Osaka Chemical Co., and then sterilized in an autoclave. The product was placed in a PET transparent tray (length: 310 mm, width: 220 mm, height: 80 mm), and then added and mixed with 20 g of said culture fluid and 100 g of sterile water. The tray was cover with a piece of sterile cloth, and cultured for 17 days with continuously irradiating with a light at an illuminance of 6,000, in an environmental control room of a temperature 25°C and a humidity 90% RH. After cultivation, the flaked barley with the seed coat on which fungus bodies (containing many conidia) was dried. The dried flaked barley with the seed coat and 5 agate balls of 20 mm diameter were placed in a standard sieve according to JIS (JIS Z 8801: a 60-mesh sieve was used), stacked on a standard sieve according to JIS (JIS Z 8801: 100- and 200-mesh sieves were used), and then shaken for 10 minutes on an automated sieve shaker (Fritsch GmbH) to obtain 2 to 3 g of fungus powder in a fraction not more than 200-mesh, which contained 1 x 10¹¹ CFU/g of the fungus body of T1 strain.

### Example 4 (Preparation of an insecticidal filamentous fungus 2)

In a 500 mL flask, a fungus body of Beauveria bassiana F-667, which was previously cultured in potato dextrose medium (Dif co Laboratories), was inoculated to 100 mL of potato dextrose agar medium (Difco Laboratories), and then cultured with shaking for 3 days at 25°C to obtain a culture fluid. Next, 80 g of flaked barley with the seed coat (Matsukage Seibaku Co. ltd.) was pre-crushed to particles having a diameter of 1 to 5 mm by a hand crusher HC-1 (Osaka Chemical Co., Ltd.), and then sterilized in an autoclave. The product was placed in a PET transparent tray (length: 310 mm, width: 220 mm, height: 80 mm), and then added and mixed with 20 g of said culture fluid and 100g of sterile water. The tray was cover with a piece of sterile cloth, and cultured for 17 days with continuously irradiating with a light at an illuminance of 6, 000 lux, in an environmental control room of a temperature 25°C and a humidity 90% RH. After cultivation, the flaked barley with the seed coat on which fungus bodies (containing many conidia) was dried. The dried flaked barley with the seed coat and 5 agate balls of 20 mm diameter were placed in a standard sieve according to JIS (JIS Z 8801: a 60-mesh sieve was used), stacked on a standard sieve according to JIS (JIS Z 8801: 100- and 200-mesh sieves were used), and then shaken for 10 minutes on an automated sieve shaker (Fritsch GmbH) to obtain 4 to 5 g of fungus powder in a fraction not more than 200-mesh which contained 1 × 10¹¹ CFU/g of the fungus body.

### Example 5 (Preparation of the present oil-based formulation: 1)

In a glass bottle, 88.0% by weight of a petroleum hydrocarbon oil (NICHIBEIKOYU Co., Ltd., a distillation characteristic of a 50 vol % recovered temperature is 472°C, amounts of ingredients: 74% by weight of a paraffin hydrocarbon, 1.3% by weight of an aromatic hydrocarbon) and 5.0% by weight of Pegnol 24-O (TOHO Chemical Industry Co., Ltd., a nonionic surfactant of a polyoxyethylene fatty acid ester, HLB 7.9) were charged and mixed well, and then added 5.0% by weight of the fungus powder obtained in Example 3 and mixed. The mixture was further mixed with 2.0% by weight of calcium chloride (Wako Pure Chemical Industries, Ltd.) that had been pound in a mortar to obtain a present oil-based formulation (1).

### Example 6 (Preparation of the present oil-based formulation: 2)

In a glass bottle, 90.0% by weight of a petroleum hydrocarbon oil (NICHIBEIKOYU Co., Ltd., a distillation characteristic of a 50 vol % recovered temperature is 472°C, amounts of ingredients: 74% by weight of a paraffin hydrocarbon, 1.3% by weight of an aromatic hydrocarbon) and 5.0% by weight of Pegnol ST-3 (TOHO Chemical Industry Co., Ltd., a nonionic surfactant of a polyoxyethylene alkyl ether, HLB 7.9) were charged and mixed well, and then added 5.0% by weight of the fungus powder obtained in Example 3 and mixed. The mixture was further mixed with 5% by weight of granular silica gel (Wako Pure Chemical Industries, Ltd.) per 100% by weight of saidmixture to obtain a present oil-based formulation (2).

### Example 7 (Preparation of the present oil-based formulation: 3)

In a glass bottle, 90.0% by weight of a petroleum hydrocarbon oil (NICHIBEIKOYU Co., Ltd., a distillation characteristic of a 50 vol % recovered temperature is 472°C, amounts of ingredients: 74% by weight of paraffin hydrocarbon, 1.3% by weight of an aromatic hydrocarbon) and 5.0% by weight of Pegnol ST-3 (TOHO Chemical Industry Co., Ltd., a nonionic surfactant of a polyoxyethylene alkyl ether, HLB 7.9) were charged and mixed well, and then added 5.0% by weight of the fungus powder obtained in Example 3 and mixed. The mixture was further mixed with 5% by weight of molecular sieve 4A 1/16 (Wako Pure Chemical Industries, Ltd.) per 100% by weight of said mixture to obtain a present oil-based formulation (3).

### Example 8 (Preparation of the present oil-based formulation: 4)

In a glass bottle, 85.0% by weight of a petroleum hydrocarbon oil (NICHIBEIKOYU Co., Ltd., a distillation characteristic of a 50 vol % recovered temperature is 472°C, amounts of ingredients : 74% by weight of a paraffin hydrocarbon, 1.3% by weight of an aromatic hydrocarbon) and 10.0% by weight of Pegnol 24-O (TOHO Chemical Industry Co., Ltd., a nonionic surfactant of a polyoxyethylene fatty acid ester, HLB 7.9) were charged and mixed well, and then added 5.0% by weight of the fungus powder obtained in Example 3 and mixed. The mixture was further mixed with 5% by weight of molecular sieve 4A 1/16 (Wako Pure Chemical Industries, Ltd.) per 100% by weight of said mixture to obtain a present oil-based formulation (4).

### Example 9 (Preparation of the present oil-based formulation: 5)

In a glass bottle, 85.0% by weight of a petroleum hydrocarbon oil (NICHIBEIKOYU Co., Ltd., a distillation characteristic of a 50 vol % recovered temperature is 472°C, amounts of ingredients: 74% by weight of a paraffin hydrocarbon, 1.3% by weight of an aromatic hydrocarbon) and 10.0% by weight of Pegnol O-4 (TOHO Chemical Industry Co., Ltd., a nonionic surfactant of a polyoxyethylene alkyl ether, HLB 7.9) were charged and mixed well, and then added 5.0% by weight of the fungus powder obtained in Example 3 and mixed. The mixture was further mixed with 5% by weight of molecular sieve 4A 1/16 (Wako Pure Chemical Industries, Ltd.) per 100% by weight of saidmixture to obtain a present oil-based formulation (5).

### Example 10 (Preparation of the present oil-based formulation: 6)

In a glass bottle, 85.0% by weight of a petroleum hydrocarbon oil (NICHIBEIKOYU Co., Ltd., a distillation characteristic of a 50 vol % recovered temperature is 472°C, amounts of ingredients : 74% by weight of a paraffin hydrocarbon, 1.3% by weight of an aromatic hydrocarbon) and 10.0% by weight of Pegnol ST-3 (TOHO Chemical Industry Co., Ltd., a nonionic surfactant of a polyoxyethylene alkyl ether, HLB 7.9) were charged and mixed well, and then added 5.0% by weight of the fungus powder obtained in Example 3 and mixed. The mixture was further mixed with 5% by weight of molecular sieve 4A 1/16 (Wako Pure Chemical industries, Ltd.) per 100% by weight of saidmixture to obtain a present oil-based formulation (6).

### Example 11 (Preparation of the present oil-based formulation: 7)

In a glass bottle, 85.0% by weight of a petroleum hydrocarbon oil (NICHIBEIKOYU Co., Ltd., a distillation characteristic of a 50 vol % recovered temperature is 472°C, amounts of ingredients: 74% by weight of a paraffin hydrocarbon, 1.3% by weight of an aromatic hydrocarbon) and 10.0% by weight of Sorpol 4274 (TOHO Chemical Industry Co., Ltd., a nonionic surfactant of a mixture of a sorbitan fatty acid ester and a polyoxyalkylene alkyl ether, HLB 8.2) were charged and mixed well, and then added 5.0% by weight of the fungus powder obtained in Example 3 and mixed. The mixture was further! mixed with 5% by weight of molecular sieve 4A 1/16 (Wako Pure Chemical Industries, Ltd.) per 100% by weight of said mixture to obtain a present oil-based formulation (7).

### Example 12 (Preparation of the present oil-based formulation: 8)

In a glass bottle. 90.0% by weight of a petroleum hydrocarbon oil (NICHIBEIKOYU Co., Ltd., a distillation characteristic of a 50 vol % recovered temperature is 472°C, amounts of ingredients: 74% by weight of a paraffin hydrocarbon, 1.3% by weight of an aromatic hydrocarbon) and 5.0% by weight of Pegnol 24-6 (TOHO Chemical Industry Co., Ltd., a nonionic surfactant of a polyoxyethylene fatty acid esther, HLB 7.9) were charged and mixed well, and then added 5.0% by weight of the fungus powder obtained in Example 3 and mixed. The mixture was further mixed with 5% by weight of molecular sieve 4A 1/16 (Wako Pure Chemical Industries, Ltd.) per 100% by weight of said mixture to obtain a present oil-based formulation (8).

### Example 13 (Preparation of the present oil-based formulation: 9)

In a glass bottle, 90.0% by weight of a petroleum hydrocarbon oil (NICHIBEIKOYU Co., Ltd., a distillation characteristic of a 50 vol % recovered temperature is 472°C, amounts of ingredients : 74% by weight of a paraffin hydrocarbon, 1.3% by weight of an aromatic hydrocarbon) and 5.0% by weight of Pegnol 24-O (TOHO Chemical Industry Co., Ltd., a nonionic surfactant of a polyoxyethylene fatty acid ester, HLB 7.9) were charged and mixed well, and then added 5.0% by weight of the fungus powder obtained in Example 3 and mixed. The mixture was further mixed with 5% by weight of granular silica gel (Wako Pure Chemical Industries, Ltd.) per 100% by weight of said mixture to obtain a present oil-based formulation (9).

### Example 14 (Preparation of the present oil-based formulation: 10)

In a glass bottle, 85.0% by weight of a petroleum hydrocarbon oil (NICHIBEIKOYU Co., Ltd., a distillation characteristic of a 50 vol % recovered temperature is 472°C, amounts of ingredients: 74% by weight of a paraffin hydrocarbon, 1.3% by weight of an aromatic hydrocarbon) and 10.0% by weight of Pegnol 24-O (TOHO Chemical Industry Co., Ltd., a nonionic surfactant of a polyoxyethylene fatty acid ester, HLB 7.9) were charged and mixed well, and then added 5.0% by weight of the fungus powder obtained in Example 4 and mixed. The mixture was further mixed with 5% by weight of molecular sieve 4A 1/16 (Wako Pure Chemical Industries, Ltd.) per 100% by weight of saidmixture to obtain a present oil-based formulation (10).

### Comparative Example 1 (Preparation of a comparative oil-based formulation: 1)

In a glass bottle, 90.0% by weight of a petroleum hydrocarbon oil (NICHIBEIKOYU Co., Ltd., a distillation characteristic of a 50 vol % recovered temperature is 472°C, amounts of ingredients: 74% by weight of a paraffin hydrocarbon, 1.3% by weight of an aromatic hydrocarbon) and 5.0% by weight of Pegnol 24-O (TOHO Chemical Industry Co., Ltd., a nonionic surfactant of a polyoxyethylene fatty acid ester, HLB 7.9) were charged and mixed well, and then added 5.0% by weight of the fungus powder obtained in Example 3. The mixture was further mixed to obtain a comparative oil-based formulation (1).

### Comparative Example 2 (Preparation of a comparative oil-based formulation: 2)

In a glass bottle, 90.0% by weight of a petroleum hydrocarbon oil (NICHIBEIKOYU Co., Ltd., a distillation characteristic of a 50 vol % recovered temperature is 472°C, amounts of ingredients: 74% by weight of a paraffin hydrocarbon, 1.3% by weight of an aromatic hydrocarbon) and 5.0% by weight of Pegnol ST-3 (TOHO Chemical Industry Co., Ltd., a nonionic surfactant of a polyoxyethylene alkyl ether, HLB 7.9) were charged and mixed well, and then added 5.0% by weight of the fungus powder obtained in Example 3. The mixture was further mixed to obtain a comparative oil-based formulation (2).

### Comparative Example 3 (Preparation of a comparative oil-based formulation: 3)

In a glass bottle, 85.0% by weight of a petroleum hydrocarbon oil (NICHIBEIKOYU Co., Ltd., a distillation characteristic of a 50 vol % recovered temperature is 472°C, amounts of ingredients: 74% by weight of a paraffin hydrocarbon, 1.3% by weight of an aromatic hydrocarbon) and 10.0% by weight of Sorpol 5060 (TOHO Chemical Industry Co., Ltd., an anionic surfactant of sodium dodecylbenzenesulfonate) were charged and mixed well, and then added 5.0% by weight of the fungus powder obtained in Example 3. Said mixture was further mixed with 5% by weight of molecular sieve 4A 1/16 (Wako Pure Chemical Industries, Ltd.) per 100% by weight of said mixture to obtain a comparative oil-based formulation (3).

### Comparative Example 4 (Preparation of a comparative oil-based formulation: 4)

In a glass bottle, 85.0% by weight of a petroleum hydrocarbon oil (NICHIBEIKOYU Co., Ltd., a distillation characteristic of a 50 vol % recovered temperature is 472°C, amounts of ingredients : 74% by weight of a paraffin hydrocarbon, 1.3% by weight of an aromatic hydrocarbon) and 10.0% by weight of Soprophor 4D384 (TOHO Chemical Industry Co. , Ltd., an anionic surfactant of polyoxyethylene tristyryl phenyl ether sulfuric acid) were charged and mixed well, and then added 5.0% by weight of the fungus powder obtained in Example 3. The mixture was further mixed with 5% by weight of molecular sieve 4A 1/16 (Wako Pure Chemical Industries, Ltd.) per 100% by weight of said mixture to obtain a comparative oil-based formulation (4).

### Comparative Example 5 (Preparation of a comparative oil-based formulation: 5)

In a glass bottle, 85.0% by weight of a petroleum hydrocarbon oil (NICHIBEIKOYU Co., Ltd., a distillation characteristic of a 50 vol % recovered temperature is 472°C, amounts of ingredients: 74% by weight of a paraffin hydrocarbon, 1.3% by weight of an aromatic hydrocarbon) and 10.0% by weight of Soprophor 3D33 (TOHO Chemical Industry Co., Ltd., an anionic surfactant of polyoxyethylene tristyryl phenyl ether phosphoric acid) were charged and mixed well, and then added 5.0% by weight of the fungus powder obtained in Example 3. Said mixture was further mixed with 5% by weight of molecular sieve 4A 1/16 (Wako Pure Chemical industries, Ltd.) per 100% by weight of saidmixture to obtain a comparative oil-based formulation (5).

### Comparative Example 6 (Preparation of a comparative oil-based formulation: 6)

In a glass bottle, 85.0% by weight of a petroleum hydrocarbon oil (NICHIBEIKOYU Co., Ltd., a distillation characteristic of a 50 vol % recovered temperature is 472°C, amounts of ingredients: 74% by weight of a paraffin hydrocarbon, 1.3% by weight of an aromatic hydrocarbon) and 10.0% by weight of Catinal LTC-35A (TOHO Chemical Industry Co., Ltd., a cationic surfactant of lauryltrimethylammonium chloride) were charged and mixed well, and then added 5.0% by weight of the fungus powder obtained in Example 3. The mixture was further mixed with 5% by weight of molecular sieve 4A 1/16 (Wako Pure Chemical Industries, Ltd.) per 100% by weight of the mixture to obtain a comparative oil-based formulation (6).

### Comparative Example 7 (Preparation of a comparative oil-based formulation: 7)

In a glass bottle, 85.0% by weight of a petroleum hydrocarbon oil (NICHIBEIKOYU Co., Ltd., a distillation characteristic of a 50 vol % recovered temperature is 472°C, amounts of ingredients: 74% by weight of a paraffin hydrocarbon, 1.3% by weight of an aromatic hydrocarbon) and 10.0% by weight of Pegnol 24-0 (TOHO Chemical Industry Co., Ltd., a nonionic surfactant of a polyoxyethylene fatty acid ester, HLB 7.9) were charged and mixed well, and then added 5.0% by weight of the fungus powder obtained in Example 4. The mixture was further mixed to obtain a comparative oil-based formulation (7).

### Test Example 1 (stability of insecticidal filamentous fungus viability in the present oil-based preparation: 1)

20 mg of a sample was taken from each of the present oil-based formulations (1), (2), (3), (8) and (9) and comparative oil-based formulations (1) and (2), and added with 20 mL of sterile diluted water to prepare a suspension. The suspension was diluted to an appropriate concentration with the sterile diluted water. 100 µL of the resultant diluted suspension was dropped and spread on a potato dextrose agar medium, and cultured for 2 days at 25°C. After cultivation, a viable count of insecticidal filamentous fungi in said formulation was determined by counting grown colonies. At the same time, each of the present oil-based formulation (1), (2), (3), (8) and (9) and comparative oil-based formulations (1) and (2) was placed in a glass screw cap bottle and closed, and then stored in dark for 12 weeks at 25°C. 20 mg of a sample was taken from each of the stored present oil-based formulations 1 to 3 and comparative oil-based formulations 1 and 2, and added with 20 mL of sterile diluted water to prepare a suspension. The suspension was diluted to an appropriate concentration with the sterile diluted water. 100 µL of the resultant diluted suspension was dropped and spread on a potato dextrose agar medium, and cultured for 2 days at 25°C. After cultivation, a viable count of insecticidal filamentous fungi in said formulation was determined by counting grown colonies. A ratio of viable counts of insecticidal filamentous fungi in the formulation before and after storage thus obtained was calculated for a survival rate of the insecticidal filamentous fungus after 12 weeks storage. The sterile diluted water used was prepared by adding Shin Lino (Nihon Nohyaku Co., Ltd., a spreader) and Silwet L-77 (Nippon Unica Co., a surfactant) in a concentration of 0.1% (w/v) each to an aqueous solution of 0.85% (w/v) of sodium chloride, and sterilizing.
The survival rates of the insecticidal filamentous fungi in the present oil-based formulations (1), (2), (3), (8) and (9) and comparative oil-based formulations (1) and (2) after 12 weeks storage are shown in Table 2.

**Table 2**

| Formulation | Survival rate (%) |
|---|---|
| Present oil-based formulation (1) | 100 |
| Present oil-based formulation (2) | 100 |
| Present oil-based formulation (3) | 100 |
| Present oil-based formulation (8) | 100 |
| Present oil-based formulation (9) | 100 |
| Comparative oil-based formulation (1) | 50 |
| Comparative oil-based formulation (2) | 75 |

### Test Example 2 (stability of insecticidal filamentous fungus viability in the present oil-based formulation: 2)

20 mg of a sample was taken from each of the present oil-based formulation (10) and the comparative oil-based formulation (7), and added with 20 mL of sterile diluted water to prepare a suspension. The suspension was diluted to an appropriate concentration with the sterile diluted water. 100 µL of the resultant diluted suspension was dropped and spread on a potato dextrose agar medium, and cultured for 2 days at 25°C. After cultivation, a viable count of insecticidal filamentous fungi in said formulation was determined by counting grown colonies. At the same time, each of the present oil-based formulation (10) and the comparative oil-based formulation (7) was placed in a glass screw cap bottle and closed, and then stored in dark for half a year at 25°C. 20 mg of a sample was taken from each of the storedpresent oil-basedformulation (10) and the comparative oil-based formulation (7), and added with 20 mL of sterile diluted water to prepare a suspension. The suspension was diluted to an appropriate concentration with the sterile diluted water. 100 µL of the resultant diluted suspension was dropped and spread on a potato dextrose agar medium, and cultured for 2 days at 25°C. After cultivation, a viable count of insecticidal filamentous fungi in the formulation was determined by counting grown colonies. A ratio of viable counts of insecticidal filamentous fungi in said formulation before and after storage thus obtained was calculated for a survival rate of the insecticidal filamentous fungus after half year storage. The sterile diluted water used was prepared by adding Shin Lino (Nihon Nohyaku Co., Ltd., a spreader) and Silwet L-77 (Nippon Unica o., a surfactant) in a concentration of 0. 1% (w/v) each to an aqueous solution of 0.85% (w/v) of sodium chloride, and sterilizing. Comparison between survival rates of insecticidal filamentous fungi in the present oil-based formulation (10) after 1 year storage and the comparative oil-based formulation (7) after 1 year storage shown that the present oil-based formulation (10) have higher survival rate than that of the comparative oil-based formulation (7).

### Test Example 3 (stability of insecticidal filamentous fungus viability in the present oil-based formulation: 3)

20 mg of a sample was taken from each of the present oil-based formulations (4) to (7) and the comparative oil-based formulations (3) to (6), and added with 20 mL of sterile diluted water to prepare a suspension. The suspension was diluted to an appropriate concentration with the sterile diluted water. 100 µL of the resultant diluted suspension was dropped and spread on a potato dextrose agar medium, and cultured for 2 days at 25°C. After cultivation, a viable count of insecticidal filamentous fungi in said formulation was determined by counting grown colonies. At the same time, each of the present oil-based formulations 4) to (7) and the comparative oil-based formulations (3) to (6) was placed in a glass screw cap bottle and closed, and then stored in dark for two weeks at 40°C. 20 mg of a sample was taken from each of the stored present oil-based formulations (4) to (7) and the comparative oil-based formulations (3) to (6), and added with 20 mL of sterile diluted water to prepare a suspension. The suspension was diluted to an appropriate concentration with the sterile diluted water. 100 µL of the resultant diluted suspension was dropped and spread on a potato dextrose agar medium, and cultured 2 days at 25°C. After cultivation, a viable count of insecticidal filamentous fungi in the formulation after storage was determined by counting grown colonies. A ratio of viable counts of insecticidal filamentous fungi in said formulation before and after storage thus obtained was calculated for a survival rate of the insecticidal filamentous fungus after 2 weeks storage. The sterile diluted water used was prepared by adding Shin Lino (Nihon Nohyaku Co., Ltd., a spreader) and Silwet L-77 (Nippon Unica Co., a surfactant) in a concentration of 0.1% (w/v) each to an aqueous solution of 0.85% (w/v) of sodium chloride, and sterilizing.

Survival rates of insecticidal filamentous fungi in the present oil-based formulations (4) to (7) and the comparative oil-based formulations (3) to (6) after storage for 2 weeks at 40°C are shown in Table 3.

**Table 3**

| Formulation | Survival rate (%) |
|---|---|
| Present oil-based formulation (4) | 100 |
| Present oil-based formulation (5) | 100 |
| Present oil-based formulation (6) | 100 |
| Present oil-based formulation (7) | 100 |
| Comparative oil-based formulation (3) | 25 |
| Comparative oil-based formulation (4) | 67 |
| Comparative oil-based formulation (5) | 25 |
| Comparative oil-based formulation (6) | 0.01 |

### Test Example (Emulsification test of the present oil-based formulation)

230 mL of water of hardness 3 was charged into a 250 mL cylinder with a fitted stopper. The cylinder was stopped up with the stopper, and then allowed to stand for 30 minutes or longer at 20°C in a thermostat bath. 250 mg each of the present oil-based formulations (1) to (10) was added to individual cylinders, and then each of these cylinders was adjusted to 250 mL by adding water of hardness 3 at 20°C. The cylinder was stopped up with the stopper, and then turned upside down ten times for 20 seconds, and observed for emulsification state. Results are shown in Table 4.

**Table 4**

| Formulation | Emulsification state |
|---|---|
| Present oil-based formulation (1) | Uniformly emulsified |
| Present oil-based formulation (2) | Uniformly emulsified |
| Present oil-based formulation (3) | Uniformly emulsified |
| Present oil-based formulation (4) | Uniformly emulsified |
| Present oil-based formulation (5) | Uniformly emulsified |
| Present oil-based formulation (6) | Uniformly emulsified |
| Present oil-based formulation (7) | Uniformly emulsified |
| Present oil-based formulation (8) | Uniformly emulsified |
| Present oil-based formulation (9) | Uniformly emulsified |
| Present oil-based formulation (10) | Uniformly emulsified |

## Claims

1. An insecticidal oil-based formulation, which comprises a petroleum hydrocarbon oil, a nonionic surfactant suitable for emulsifying the petroleum hydrocarbon oil, a desiccating agent and an insecticidal filamentous fungus.

2. The insecticidal oil-based formulation according to claim 1, wherein said nonionic surfactant has a HLB in the range suitable for emulsifying the petroleum hydrocarbon oil.

3. The insecticidal oil-based formulation according to claim 1 or 2, wherein said petroleum hydrocarbon oil having a distillation characteristic of a 50 vol % recovered temperature of 350°C to 550°C.

4. The insecticidal oil-based formulation according to claim 1, wherein said petroleum hydrocarbon oil has a distillation characteristic of a 50 vol % recovered temperature of 400°C to 500°C, and said nonionic surfactant is one or more surfactants selected from the group consisting of polyoxyethylene fatty acid ester, polyoxyethylene alkyl ether, sorbitan fatty acid ester and polyoxyalkylene alkyl ether, and has a HLB in the range suitable for emulsifying said petroleum hydrocarbon oil.

5. The insecticidal oil-based formulation according to any of claim 1 to 4, wherein said desiccating agent is one or more desiccating agents selected from silicon oxide compounds and calcium compounds.

6. The insecticidal oil-based formulation according to any of claim 1 to 5, wherein said insecticidal filamentous fungus is one or more strains of fungi of genera selected from the group consisting of genus Paecilomyces, genus Beauveria, genus Metarhizium, genus Nomuraea, genus Verticillium, genus Hirsutella, genus Culicinomyces, genus Sorosporella and genus Tolypocladium.

7. The insecticidal oil-based formulation according to any of claim 1 to 5, wherein said insecticidal filamentous fungus is a filamentous fungus of the genus Paecilomyces.

8. The insecticidal oil-based formulation according to any of claim 1 to 5, wherein said insecticidal filamentous fungus is a filamentous fungus of Paecilomyces tenuipes.

9. The insecticidal oil-based formulation according to any of claim 1 to 5, wherein said insecticidal filamentous fungus is Paecilomyces tenuipes strain T1 (FERM BP-7861).

10. The insecticidal oil-based formulation according to any of claim 1 to 5 , wherein said insecticidal filamentous fungus is a filamentous fungus of the genus Beauveria.

11. The insecticidal oil-based formulation according to any of claim 1 to 5 , wherein said insecticidal filamentous fungus is a filamentous fungus of Beauveria bassiana.

12. The insecticidal oil-based formulation according to any of claim 1 to 5, wherein said insecticidal filamentous fungus is one or more strains selected from the group consisting of Beauveria bassiana strain F-667 (FERM BP-10514), Beauveria bassiana strain F-942 (FERMBP-10515), Beauveria bassiana strain F-1134 (FERM BP-10516) Beauveria bassiana strain F-1274 (FERM BP-10517) and Beauveria bassiana strain F-1310 (FERM BP-10518).

13. A method for controlling insect pests, which comprises applying the insecticidal oil-based formulation according to any of claim 1 to 12 to an insect pest, a habitat of the insect pest or a plant vulnerable to the insect pest.

## Patentansprüche

1. Eine insektizide Formulierung auf Ölbasis, die ein Erdölkohlenwasserstoff-Öl, ein nichtionisches oberflächenaktives Mittel, das zum Emulgieren des Erdölkohlenwasserstoff-Öls geeignet ist, ein Trocknungsmittel und einen insektiziden Fadenpilz umfasst.

2. Die insektizide Formulierung auf Ölbasis gemäß Anspruch 1, wobei das nichtionische oberflächenaktive Mittel einen HLB-Wert in dem Bereich, der zum Emulgieren des Erdölkohlenwasserstoff-Öls geeignet ist, aufweist.

3. Die insektizide Formulierung auf Ölbasis gemäß Anspruch 1 oder 2, wobei das Erdölkohlenwasserstoff-Öl eine Destillationseigenschaft von 50 Vol%- zurückgewonnen- Temperatur von 350 °C bis 550 °C aufweist.

4. Die insektizide Formulierung auf Ölbasis gemäß Anspruch 1, wobei das Erdölkohlenwasserstoff-Öl eine Destillationseigenschaft von 50 Vol%- zurückgewonnen- Temperatur von 400 °C bis 500 °C aufweist und wobei das nichtionische oberflächenaktive Mittel ein oder mehrere oberflächenaktive Mittel, ausgewählt aus der Gruppe bestehend aus Polyoxyethylenfettsäureester, Polyoxyethylenalkylether, Sorbitanfettsäureester und Polyoxyalkylenalkylether, ist und einen HLB-Wert in dem Bereich, der zum Emulgieren des Erdölkohlenwasserstoff-Öls geeignet ist, aufweist.

5. Die insektizide Formulierung auf Ölbasis gemäß einem der Ansprüche 1 bis 4, wobei das Trocknungsmittel ein oder mehrere Trocknungsmittel, ausgewählt aus Siliziumoxidverbindungen und Calciumverbindungen, ist.

6. Die insektizide Formulierung auf Ölbasis gemäß einem der Ansprüche 1 bis 5, wobei der insektizide Fadenpilz ein oder mehrere Pilzstämme der Gattungen, ausgewählt aus der Gruppe bestehend aus der Gattung Paecilomyces, der Gattung Beauveria, der Gattung Metarhizium, der Gattung Nomuraea, der Gattung Verticillium, der Gattung Hirsutella, der Gattung Culicinomyces, der Gattung Sorosporella und der Gattung Tolypocladium, ist.

7. Die insektizide Formulierung auf Ölbasis gemäß einem der Ansprüche 1 bis 5, wobei der insektizide Fadenpilz ein Fadenpilz der Gattung Paecilomyces ist.

8. Die insektizide Formulierung auf Ölbasis gemäß einem der Ansprüche 1 bis 5, wobei der insektizide Fadenpilz ein Fadenpilz vom Typ Paecilomyces tenuipes ist.

9. Die insektizide Formulierung auf Ölbasis gemäß einem der Ansprüche 1 bis 5, wobei der insektizide Fadenpilz der Paecilomyces tenuipes Stamm T1 (FERM BP-7861) ist.

10. Die insektizide Formulierung auf Ölbasis gemäß einem der Ansprüche 1 bis 5, wobei der insektizide Fadenpilz ein Fadenpilz der Gattung Beauveria ist.

11. Die insektizide Formulierung auf Ölbasis gemäß einem der Ansprüche 1 bis 5, wobei der insektizide Fadenpilz ein Fadenpilz vom Typ Beauveria bassiana ist.

12. Die insektizide Formulierung auf Ölbasis gemäß einem der Ansprüche 1 bis 5, wobei der insektizide Fadenpilz ein oder mehrere Stämme, ausgewählt aus der Gruppe bestehend aus dem Beauveria bassiana Stamm F-667 (FERM BP-10514), dem Beauveria bassiana Stamm F-942 (FERM BP-10515), dem Beauveria bassiana Stamm F-1134 (FERM BP-10516), dem Beauveria bassiana Stamm F-1274 (FERM BP-10517) und dem Beauveria bassiana Stamm F-1310 (FERM BP-10518), ist.

13. Ein Verfahren zur Bekämpfung von Schadinsekten, welches das Aufbringen der insektiziden Formulierung auf Ölbasis gemäß einem der Ansprüche 1 bis 12 auf ein Schadinsekt, einen Lebensraum des Schadinsekts oder eine Pflanze, die für das Schadinsekt anfällig ist, umfasst.

## Revendications

1. Formulation à base d'huile insecticide, qui comprend une huile d'hydrocarbure de pétrole, un tensioactif non ionique approprié pour émulsifier l'huile d'hydrocarbure de pétrole, un agent de dessiccation et un champignon filamenteux insecticide.

2. Formulation à base d'huile insecticide selon la revendication 1, dans laquelle ledit tensioactif non ionique possède une HLB dans la plage appropriée pour émulsifier l'huile d'hydrocarbure de pétrole.

3. Formulation à base d'huile insecticide selon la revendication 1 ou 2, dans laquelle ladite huile d'hydrocarbure de pétrole possède une caractéristique de distillation d'une température de récupération à 50 % vol de 350 °C à 550 °C.

4. Formulation à base d'huile insecticide selon la revendication 1, dans laquelle ladite huile d'hydrocarbure de pétrole possède une caractéristique de distillation d'une température de récupération à 50 % vol de 400 °C à 500 °C, et ledit tensioactif non ionique est un ou plusieurs tensioactifs sélectionnés dans le groupe consistant en un ester d'acide gras de polyoxyéthylène, un alkyléther de polyoxyéthylène, un ester d'acide gras de sorbitane et un alkyléther de polyoxyalkylène, et possède une HLB dans la plage appropriée pour émulsifier ladite huile d'hydrocarbure de pétrole.

5. Formulation à base d'huile insecticide selon l'une quelconque des revendications 1 à 4, dans laquelle ledit agent de dessiccation est un ou plusieurs agents de dessiccation sélectionnés parmi des composés d'oxyde de silicium et des composés du calcium.

6. Formulation à base d'huile insecticide selon l'une quelconque des revendications 1 à 5, dans laquelle ledit champignon filamenteux insecticide est une ou plusieurs souches de champignons de genres sélectionnés dans le groupe consistant en le genre Paecilomyces, le genre Beauveria, le genre Metarhizium, le genre Nomuraea, le genre Verticillium, le genre Hirsutella, le genre Culicinomyces, le genre Sorosporella et le genre Tolypocladium.

7. Formulation à base d'huile insecticide selon l'une quelconque des revendications 1 à 5, dans laquelle ledit champignon filamenteux insecticide est un champignon filamenteux du genre Paecilomyces.

8. Formulation à base d'huile insecticide selon l'une quelconque des revendications 1 à 5, dans laquelle ledit champignon filamenteux insecticide est un champignon filamenteux de Paecilomyces tenuipes.

9. Formulation à base d'huile insecticide selon l'une quelconque des revendications 1 à 5, dans laquelle ledit champignon filamenteux insecticide est Paecilomyces tenuipes souche T1 (FERM BP-7861).

10. Formulation à base d'huile insecticide selon l'une quelconque des revendications 1 à 5, dans laquelle ledit champignon filamenteux insecticide est un champignon filamenteux du genre Beauveria.

11. Formulation à base d'huile insecticide selon l'une quelconque des revendications 1 à 5, dans laquelle ledit champignon filamenteux insecticide est un champignon filamenteux de Beauveria bassiana.

12. Formulation à base d'huile insecticide selon l'une quelconque des revendications 1 à 5, dans laquelle ledit champignon filamenteux insecticide est une ou plusieurs souches sélectionnées dans le groupe consistant en Beauveria bassiana souche F-667 (FERM BP-10514), Beauveria bassiana souche F-942 (FERM BP-10515), Beauveria bassiana souche F-1134 (FERM BP-10516), Beauveria bassiana souche F-1274 (FERM BP-10517) et Beauveria bassiana souche F-1310 (FERM BP-10518).

13. Procédé pour contrôler des insectes nuisibles, qui comprend l'application de la formulation à base d'huile insecticide selon l'une quelconque des revendications 1 à 12 à un insecte nuisible, un habitat de l'insecte nuisible ou une plante vulnérable à l'insecte nuisible.


### SEQUENCE LISTING

<110> Sumitomo Chemical Co., Ltd.
<120> INSECTICIDAL OIL-BASED FORMULATIONS COMPRISING AN INSECTICIDAL
   FILAMENTOUS FUNGUS
<130> N.97499 TJD
<140> EP 06251080.5 <141> 2006-02-28
<150> JP 2005-052875 <151> 2005-02-28
<150> JP 2005-343326 <151> 2005-11-29
<160> 2
<170> PatentIn Ver. 2.1
<210> 1
   <211> 156
   <212> DNA
   <213> Paecilomyces tenuipes
<400> 1
   aactttcaac aacggatctc ttggttctgg catcgatgaa gaacgcagcg aaatgcgata 60
   cgtaatgtga attgcagaat tccgtgaatc atcgaatctt tgaacgcaca ttgcgcccgc 120
   cagcattctg gcgggcatgc ctgttcgagc gtcatt                           156
<210> 2
   <211> 561
   <212> DNA
   <213> Paecilomyces tenuipes
<400> 2
   aaaccaacag ggattgcccc agtaacggcg agtgaagcgg caacagctca aatttgaaat 60
   ctggcccccg ggtccgagtt gtaatttgca gaggatgctt cgggcgaggt gccttccgag 120
   ttccctggaa cgggacgcca cagagggtga gagccccgtc tggtcggaca ccgagcccgt 180
   gtgaagctcc ttcgaagagt cgagtagttt gggaatgctg ctcaaaacgg gaggtatatg 240
   tcttctaaag ctaaatattg gccagagacc gatagcgcac aagtagagtg atcgaaagat 300
   gaaaagcact ttgaaaagag ggttaaaaag tacgtgaaat tgttgaaagg gaagcgccca 360
   tgaccagact tgggcccggt gaatcacccg gcgttctcgc cggtgcactt tgccgggcac 420
   aggccagcat cagtttggcg cgggggagaa aggcttcggg aacgtggctc cctcgggagt 480
   gttatagccc gctgcgcaat accctgcgcc ggactgaggt acgcgcatcg caaggatgct 540
   ggcgtaatgg tcatcagcga c                                           561